Europäisches Patentamt

European Patent Office

Office européen des brevets

(11) Publication number: **0 184 745**
**B1**

(12) **EUROPEAN PATENT SPECIFICATION**

(45) Date of publication of patent specification: **12.12.90**

(21) Application number: **85115245.4**

(22) Date of filing: **30.11.85**

(51) Int. Cl.⁵: **B 61 B 12/00, B 64 D 25/14, A 62 B 1/20, B 63 C 9/22**

(54) Evacuation slide.

(30) Priority: **03.12.84 US 677628**

(43) Date of publication of application:
**18.06.86 Bulletin 86/25**

(45) Publication of the grant of the patent:
**12.12.90 Bulletin 90/50**

(84) Designated Contracting States:
**DE FR GB**

(56) References cited:
**EP-A-0 109 610**
**US-A-3 692 144**
**US-A-4 013 247**
**US-A-4 018 321**

(73) Proprietor: **The B.F. GOODRICH Company
Dept. 0015 WHB-6 500 South Main Street
Akron, Ohio 44318 (US)**

(72) Inventor: **Fisher, John Melvin
622 Sackett Avenue
Cuyahoga Falls Ohio 44221 (US)**

(74) Representative: **Selting, Günther, Dipl.-Ing. et al
Deichmannhaus am Hauptbahnhof
D-5000 Köln 1 (DE)**

## Description

This invention relates to an inflatable evacuation slide device and more particularly to an inflatable slide for use on elevated trains where there is a restricted clearance space on either side of the railway car.

Heretofore, the evacuation of passengers from elevated trains was substantially non-existent except for use of existing structural supports and conventional platforms at spaced intervals. Conventional slides that deployed transversely of the length of the train had limited application.

A self-supporting inflatable evacuation device having the features of the precharacterizing part of Claim 1 is known from US-A-3 692 144. The known evacuation device is designed for relying upon the wing of an aircraft for deployment as the evacuees walk on a portion of the evacuation device that is supported by the wing of the craft. The first portion and the second portion of the evacuation device extend essentially in the same direction, as seen from above.

EP-A-0 109 610 discloses an inflatable evacuation device that is deployed from an aircraft directly as a single unit in a single direction extending laterally from the craft.

It is an object of the present invention to provide a novel inflatable evacuation device for emergency use from an elevated vehicle such as a train, wherein the evacuation device is deployed in a direction parallel to the length of the elevated vehicle thereby ensuring its proper deployment under substantially all conditions of evacuation need including very restricted right of way clearances, thus ensuring the safety of passengers under all conditions of use.

This object is solved, according to the present invention, with the features of Claim 1.

The present invention is directed to a novel inflatable evacuation device which provides a cantilever type inflatable porch or platform immediately adjacent a side exit or access door of an elevated vehicle such as a train. An inflatable evacuation slide for an elevated vehicle such as a train is provided wherein the evacuation device has a platform located immediately adjacent one of the exit doors of the vehicle to facilitate the movement of passengers away from the vehicle. The platform is connected to an inflatable slide that lies in the same general direction as the train thus enabling its deployment where there is little clearance space along the path of train's movement.

Figure 1 is a side elevational view of a multi-ribbed inflatable escape slide extending from an elevated train to the ground with the slide shown in phantom lines wherein the distance between the train and ground level is reduced.

Figure 2 is a front elevational view of the inflatable escape slide of Figure 1 taken on line 2—2 showing the elevated train.

Figure 3 is an enlarged plan view of that portion of the inflatable slide adjacent the train.

Figure 4 is a partial side elevational view of the upper portion of the inflatable escape slide, partly in cross-section, taken on line 4—4 of Figure 3.

Figure 5 is a cross-sectional view of the inflatable escape slide taken on line 5—5 of Figure 3 showing a portion of the train and the storage compartment and its hinged door.

Figure 6 is a cross-sectional view of the inflatable escape slide taken on line 6—6 of Figure 1.

Figure 7 is a partial cross-sectional view of the elevated train with the escape slide stored in a storage compartment therein and showing in phantom lines a portion of the escape slide deployed.

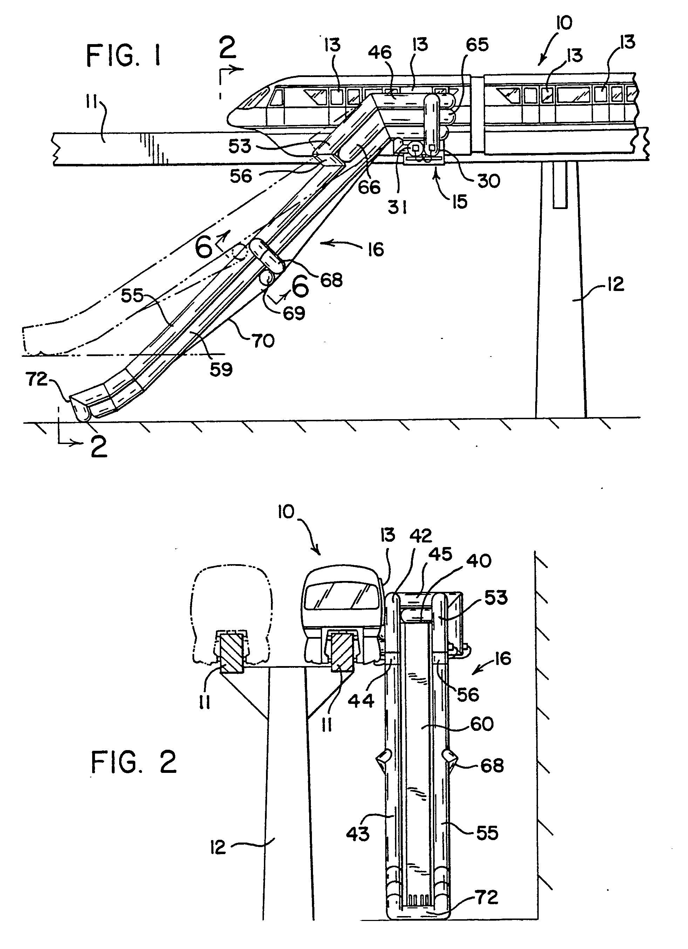

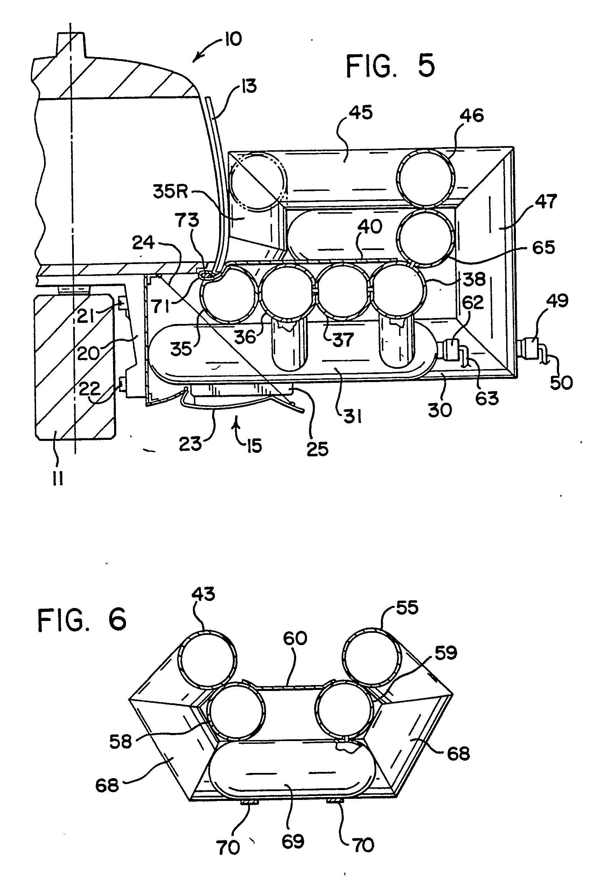

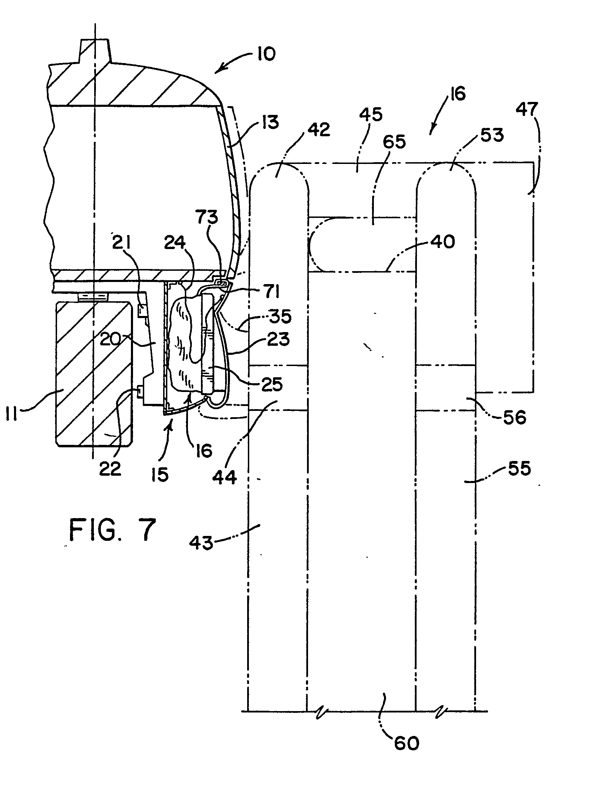

Referring now to the drawings wherein like reference numerals designate like or corresponding parts throughout the several views, there is shown in Figure 1 a train 10 mounted for movement on one of a pair of laterally spaced rails 11 which in turn are suitably supported by a plurality of longitudinally spaced columns 12 (only one shown). The train 10 has a plurality of access doors 13 spaced along its one side to facilitate the loading and unloading. Mounted to one side of selected doors of the train is a storage means 15 (Figs. 5 and 7) for an inflatable escape slide 16.

The storage means or compartment 15 is mounted on a depending support 20 that also journals rollers 21 and 22 which are adapted to engage rail 11. Storage means 15 has a door 23 suitably hinged which upon opening will extend to a horizontal position and held in place by a cable 24 which interconnects the door 23 to a support bracket within the upper portion of the storage compartment 15. The door 23 has a planar support member 25 supporting a pair of horizontally extending inflatable tubes 30 and 31 that extend in a direction outwardly or in a direction that is normal to the access or exit doors 13. Mounted above and transversely of the pair of tubes 30 and 31 are a plurality of inflatable tubes 35, 36, 37 and 38 (Fig. 5). All of such tubes 35 through 38 are suitably bonded to adjacent tubes preferably along their side portions. In addition the tubes 35 through 38 are bonded along their lowermost sides to the top of the horizontally extending tubes 30 and 31. A panel 40 is fastened tangentially to the inflatable tubes 35 through 38 to provide a platform, porch or walkway from the exit passageway of door 13. Such platform or walkway on panel is maintained in a horizontal position when escape slide is deployed by the inflatable tubes 35 through 38 and tubes 30, 31 as well as by the door 23 which is held in a horizontal plane by the cable 24.

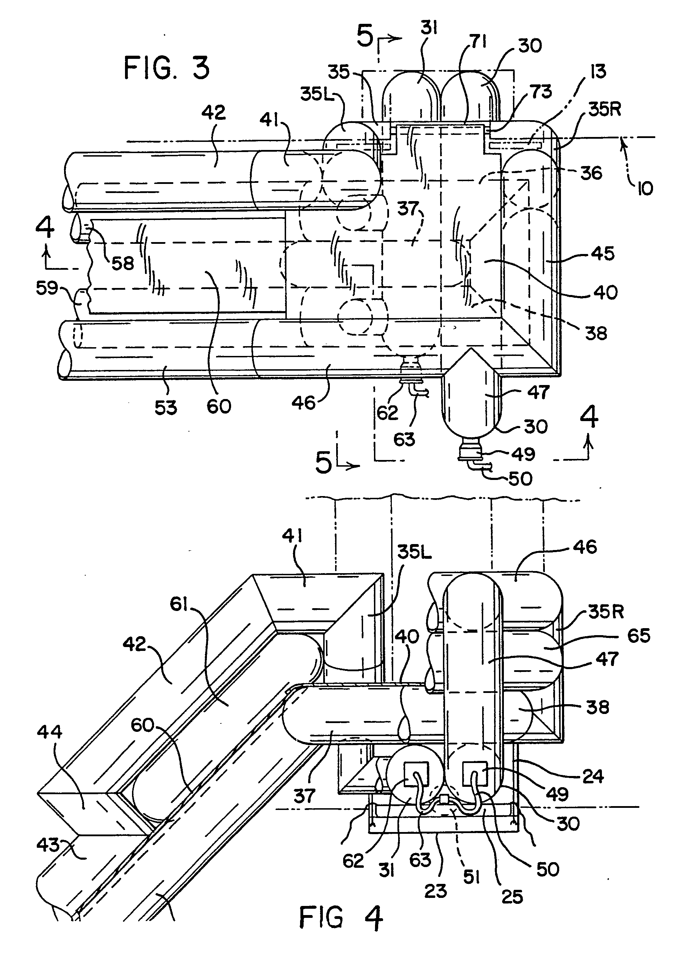

The inflatable tube 35 extends upwardly on either side of the door 13 designating such upward extensions of the tube 35 as inflatable tubes 35L and 35R (Figures 3 and 5). Tube 35L communicates directly with a horizontally extending tube 41 which in turn communicates directly with a downwardly inclined inflatable tube 42 that communicates in turn with another inclined tube 43 via a short connecting tube 44. Tube 35R communicates directly (Figure 5) with a horizontally extending tube 45 which in turn communicates directly with a horizontally extending tube 46 that is normal to such tube 45. As shown in Figure 4 tube 46 communicates with a vertically disposed tube 47 which tube 47 in turn communicates directly with tube 30. Tube 30 has an aspirator 48 (Figs. 3 and 5) connected thereto which is used to inflate tube 30 and the other tubes connected thereto. Aspirator 49 has a conduit 50 connecting it to a regulator and bottle or reservoir assembly 51 of compressed gas. Aspirators as is well known in the art utilize air from a compressed gas source and aspirate ambient air to inflate life rafts, escape slide, bag or other inflatables. As example of prior art, US-A-2,975,958 shows an aspirating nozzle, aspirating tube and closure valve. US-A-3,056,540 shows an aspirating passageway and valves. US-A-4,368,009 shows another type of aspirator device that is used to inflate escape slides. Inflatable tube 46 (Figures 1 and 3) communicates with inclined tube 53 which in turn communicates with inclined tube 55 via connecting tube 56.

The inflatable tubes 36 and 38 which form part of the main support for the platform or porch panel 40 communicate directly with a pair of lower inclined inflatable tubes 58 and 59 respectively, which tubes 58 and 59 have a slide panel 60 suitably attached or adhered to their upper surfaces by any suitable means. The respective lower inclined inflatable tubes 58 and 59 are connected or attached along their upper outer sides to the upper inclined inflatable tubes 43 and 55 forming an escape slide with protective side constraints or guides.

As seen in Figure 4, inflatable tube 31 is connected via aspirator 62 and conduit 63 to reservoir or bottle 51. The compressed air via aspirator 62 inflates the lower set of tubes such as tubes 31, 36, 37, 38 and tube 65, which in turn communicates directly with inclined tube 59 (as seen in Figure 1). Inclined tube 59 is suitably adhered along its upper surface to the lower surface of upper inclined tube 55 (Figures 1 and 6) to help insure deployment of the escape slide.

A truss bag 68 for side lateral support is also provided midway along the escape slide, transverse to the longitudinal line of the inclined inflatable tubes 43, 55, 58 and 59. As seen in Figure 1 and 6, such truss bag 68 encompasses the escape slide along the bottom and both side portions, communicating with the two upper inflatable tubes 43 and 55. Mounted closely adjacent to the lower cross portion of truss bag 68 is a truss tube 69 fastened to the undersides of the two lower tubes 58 and 59 which is at a position approximately one-half the length of the escape slide. Such truss tube 69 communicates via suitable ports to tubes 58 and 59 and accordingly is inflated simultaneously with such tubes. A truss strap 70 attached at its respective ends to the upper end portion and the lower end portion 72 of the escape slide engages both the truss bag 68 and the truss tube 69, to provide tension to the escape slide and prevent its sagging in the middle of the slide. In the truss arrangement as shown, the truss will function to provide tension to the escape slide with either inflatable truss bag 68 or truss tube 69 deflated and either tube 69 or bag 68 will have approximately the same bending resistance.

The inflatable tubes as deployed are adhesively bonded to each other so that upon inflation will form a rigid supporting porch, or platform and escape slide. The inflatable tubes are preferably fabricated from a neoprene rubber coated nylon fabric. The panel 40 which serves as a walkway for the porch is preferably coated with a non-slip rubber coating to improve the passenger's footing on such walkway. Such panel 40 may be attached to the foot of the exit door by any number of well known means, however as shown in Figure 5 an exterior flap 71 is suitably attached to a bar 73 located inside the train body thereby supporting the exit door end of the panel or walkway 40.

The slide as shown in Fig. 7 is disposed and folded within the storage means 15 having the swinging door 23 forming part of such compartment confining means. Upon release of the door 23, compressed air from the bottle 51 will inflate via aspirators 49 and 62 their respective sets of tubes. Aspirator 62 is connected to inflatable tube 31 and will inflate such tube immediately. Tubes 36 and 38 which are connected to tube 31 will also inflate as will tube 37, 65, 58, 61, 69 and 59 which are the lower set of inflatable tubes.

Aspirator 49 is connected to inflatable tube 30 and will inflate such tube immediately. Tubes 47 (Fig. 4), 46, 45, 35, 41, 42, 43, 53, 68, and 55 are all connected to such tube 30 and will also inflate with such tube, which tubes are considered the upper inflatable set of tubes. Thus, with either and first or second set of tubes inflated, egress can be assured. With the tubes all inflated, the passengers in the train can exit to the platform and then use the deployed escape slide which is disposed in the general direction of the train to assure full deployment of the escape slide under conditions where clearance space to either side of the train ordinarily would present problems of escape slide deployment.

**Claims**

1. A self-supporting inflatable evacuation device (16) for emergency use in an arrangement with an elevated vehicle such as a train having an elongated body (10) with an opening (13) on one side surface thereof, for ingress and egress of passengers therefrom, and inflating means (51, 49, 62) operative upon actuation to deploy said self-supporting evacuation device outwardly away from said elevated vehicle,

said inflatable device (16) having a first inflatable portion (35—38) that extends outwardly away in a first direction and defines a platform (40), said first inflatable portion (35—38) being supported by a horizontally extending rigid support member to provide a cantilever support for said platform, and a second inflatable portion (43, 55, 58, 59) with a flexible panel (60) defining a slide surface, said slide surface projecting downwardly at an angle to a foot end (72) of said inflatable evacuation device (16) in a direction — seen in plan view — parallel to the longitudinal centerline of the elongated body (10), characterized in that

said rigid support member is a door (23) of a compartment (15) that stores said first (35—38) and second portions (43, 55, 58, 59) in a deflated condition, said door (23) being movable into said cantilever position upon deployment of said evacuation device (16),

said compartment (15) is located beneath said elevated vehicle housing said inflating means (51, 49, 62),

and one side surface (35R, 35L) of said first inflatable portion (35—38) lies in a vertical plane that lies closely adjacent to the side surface of said elongated body (10).

2. An inflatable evacuation device as set forth in Claim 1 wherein said compartment (15) and said rigid door (23) are exterior of said elevated vehicle and adjacent said opening (13).

3. An inflatable evacuation device as set forth in Claim 1 or 2 wherein a cable (24) maintains said door (23) in a horizontal position when said evacuation device is deployed.

4. An inflatable evacuation device as set forth in one of Claims 1—3 wherein said second inflatable portion (43, 55, 58, 59) includes at least a pair of upper inflatable tubes (43, 55) and at least a pair of lower inflatable tubes (58, 59), said upper tubes and lower tubes are separately inflatable.

5. An inflatable evacuation device as set forth in one of Claims 1—4 wherein said first and second portions each have separate inflatable tubes (35—38, 43, 55, 58, 59) which are independent of each other, and each of said separate tubes operative separately to sustain the integrity of and use of said inflatable device.

6. An inflatable evacuation device as set forth in one of Claims 1—5 wherein said second portion (43, 55, 58, 59) has a pair of inflatable truss tubes (68, 69) located intermediate the length thereof, straps (70) connecting the opposite ends of said second portion and abuttingly engaging said truss tubes (68, 69) to form a tension member for said second portion, and said truss tubes connected to said separate inflatable tubes to retain the integrity of said slide and platform assembly.

## Patentansprüche

1. Selbsttragende aufblasbare Evakuierungsvorrichtung (16) für Notfälle in einer Anordnung mit einem erhöht angeordneten Fahrzeug, z.B. einem Zug, mit einem langgestreckten Körper (10) mit einer Öffnung (13) an einer Seitenfläche desselben, zum Ein-und Aussteigen von Passagieren in und aus diesem und Aufblaseinrichtungen (51, 49, 62), die bei Betätigung derart betreibbar sind, daß sie die selbsttragende Evakuierungsvorrichtung nach außen von dem erhöht angeordneten Fahrzeug weg entfalten,

wobei die aufblasbare Vorrichtung (16) einen ersten aufblasbaren Abschnitt (35—38), der sich in eine erste Richtung nach außen erstreckt und eine Plattform (40) bildet aufweist, wobei der erste aufblasbare Abschnitt (35—38) von einem sich horizontal erstreckenden starren Stützteil gestützt ist, um eine Auslegerstütze für die Plattform zu bilden, und die aufblasbare Vorrichtung einen zweiten aufblasbaren Abschnitt (43, 55, 58, 59) mit einer flexiblen Bahn (60) aufweist, die eine Rutschfläche bildet, welche sich in einem Winkel nach unten zu einem Fußende (72) der aufblasbaren Evakuierungsvorrichtung (16) in einer Richtung erstreckt, die — in Draufsicht gesehen parallel — zur Längsmittellinie des langgestreckten Körpers (10) verläuft, dadurch gekennzeichnet, daß

das starre Stützteil eine Tür (23) eines Raums (15) ist, welcher den ersten (35—38) und den zweiten Abschnitt (43, 55, 58, 59) im nicht aufgeblasenen Zustand aufnimmt, wobei die Tür (23) beim Entfalten der Evakuierungsvorrichtung (16) in die Auslegerposition bewegbar ist,

der die Aufblaseinrichtungen (51, 49, 62) enthaltende Raum (15) unter dem erhöht angeordneten Fahrzeug angeordnet ist,

und eine Seitenfläche (35R, 35L) des ersten aufblasbaren Abschnitts (35—38) in einer vertikalen Ebene liegt, die nahe neben der Seitenfläche des langgestreckten Körpers (10) liegt.

2. Aufblasbare Evakuierungsvorrichtung nach Anspruch 1, bei welcher der Raum (15) und die starre Tür (23) sich außerhalb des erhöhten Fahrzeugs und neben der Öffnung (13) befinden.

3. Aufblasbare Evakuierungsvorrichtung nach Anspruch 1 oder 2, bei der ein Seil (24) die Tür (23) in einer horizontalen Position hält, wenn die Evakuierungsvorrichtung entfaltet ist.

4. Aufblasbare Evakuierungsvorrichtung nach einem der Ansprüche 1 bis 3, bei welcher der zweite aufblasbare Abschnitt (43, 55, 58, 59) wenigstens zwei obere aufblasbare Schläuche (43, 55) und wenigstens zwei untere aufblasbare Schläuche (58, 59) aufweist, wobei die oberen und die unteren Schläuche getrennt aufblasbar sind.

5. Aufblasbare Evakuierungsvorrichtung nach einem der Ansprüche 1 bis 4, bei welcher der erste und der zweite Abschnitt jeweils getrennte, voneinander unabhängige aufblasbare Schläuche (35—38, 43, 55, 58, 59) aufweisen und wobei jeder der getrennten Schläuche separat betätigbar ist, um die Vollständigkeit und den Gebrauch der aufblasbaren Vorrichtung aufrechtzuerhalten.

6. Aufblasbare Evakuierungsvorrichtung nach einem der Ansprüche 1 bis 5, bei welcher der zweite Abschnitt (43, 55, 58, 59) zwei in der Mitte seiner Länge angeordnete aufblasbare Versteifungsschläuche (68, 69), sowie die gegenüberliegenden Enden des zweiten Abschnitts verbinden und zur Bildung eines Spannteiles für den zweiten Abschnitt an den Versteifungsschläuchen (68, 69) anliegend angreifende Gurte (70) aufweist, und bei der die Versteifungsschläuche mit den getrennten aufblasbaren Schläuchen verbunden sind, um die Vollständigkeit der Rutschen- und Plattformanordnung zu bewahren.

**Revendications**

1. Dispositif d'évacuation gonflable auto-porteur (16) pour une utilisation d'urgence dans un ensemble constitué d'un véhicule en hauteur tel qu'un train ayant un corps allongé (10) avec une ouverture (13) sur une surface latérale, pour la montée et la descente des passagers, et de moyens de gonflage (51, 49, 62) actif lors de l'actionnement de façon à déployer ledit dispositif d'évacuation auto-porteur vers l'extérieur à l'écart dudit véhicule en hauteur,

le dit dispositif gonflable (16) présentant une première partie gonflable (35 à 38) qui s'étend vers l'extérieur à l'écart dans une première direction et définit une plate-forme (40), ladite première partie gonflable (35 à 38) étant supportée par un élément de support rigide s'étendant horizontalement de façon à fournir un support en porte-à-faux pour ladite plateforme, et une deuxième partie gonflable (43, 55, 58, 59) avec un panneau flexible (60) définissant une surface de toboggan, ladite surface de toboggan se projetant vers le bas suivant un certain angle jusqu'à une extrémité de pied (72) dudit dispositif d'évacuation gonflable (16) dans une direction — vue en plan — parallèle à l'axe longitudinal du corps allongé (10), caractérisé en ce que

le dit support rigide est une porte (23) d'un compartiment (15) qui stocke lesdites première (35 à 38) et deuxième parties (43, 55, 58, 59) dans un état dégonflé, ladite porte (23) étant mobile en direction de la dite position en porte-à-faux lors du déploiement dudit dispositif d'évacuation (16),

ledit compartiment (15) est situé sous ledit véhicule allongé logeant lesdits moyens de gonflage (51, 49, 62),

et une surface latérale (35R, 35L) de ladite première partie gonflable (35 à 38) se trouve dans un plan vertical qui est proche de la surface latérale dudit corps allongé (10).

2. Dispositif d'évacuation gonflable selon la revendication 1, dans lequel ledit compartiment (15) et la dite porte rigide (23) sont à l'extérieur dudit véhicule en hauteur et adjacents à ladite ouverture (13).

3. Dispositif d'évacuation gonflable selon la revendication 1 ou 2, dans lequel un câble (24) maintient ladite porte (23) dans une position horizontale lorsque ledit dispositif d'évacuation est déployé.

4. Dispositif d'évacuation gonflable selon l'une des revendications 1 à 3, dans lequel ladite deuxième partie gonflable (43, 55, 58, 59) comprend au moins une paire de boudins supérieurs gonflables (43, 55) et au moins une paire de boudins inférieurs gonflables (58, 59), lesdits boudins supérieurs et boudins inférieurs étant gonflables séparément.

5. Dispositif d'évacuation gonflable selon l'une des revendications 1 à 4, dans lequel lesdites première et deuxième parties comportent chacune des boudins gonflables séparés (35 à 38, 43, 55, 58, 59) qui sont indépendants l'un de l'autre, chacun desdits boudins séparés étant séparément actifs pour maintenir la tenue et l'utilisation dudit dispositif gonflable.

6. Dispositif d'évacuation gonflable selon l'une des revendications 1 à 5, dans lequel ladite deuxième partie (43, 55, 58, 59) possède une paire de boudins de renforcement gonflables (68, 69) situés dans une partie intermédiaire de sa longueur, des sangles (70) reliant les extrémités opposées de ladite deuxième partie et venant en contact de butée avec lesdits boudins de renforcement (68, 69) de façon à former un élement de tension pour ladite deuximème partie, et lesdits boudins de renforcement reliés auxdits boudins gonflables séparés assurant la tenue dudit ensemble toboggan et plate-forme.

EP 0 184 745 B1

FIG. 1

FIG. 2

1

FIG. 3

FIG 4

FIG. 5

FIG. 6

FIG. 7